**Europäisches Patentamt**

**European Patent Office**

**Office européen des brevets**

(11) Veröffentlichungsnummer: **0 125 440**
**A2**

## (12) EUROPÄISCHE PATENTANMELDUNG

(21) Anmeldenummer: **84103276.6**

(22) Anmeldetag: **24.03.84**

(51) Int. Cl.³: **C 05 F 3/00**
**C 05 G 1/00**

(30) Priorität: **11.05.83 DE 3317241**

(43) Veröffentlichungstag der Anmeldung:
**21.11.84 Patentblatt 84/47**

(84) Benannte Vertragsstaaten:
**AT BE CH FR GB IT LI NL SE**

(71) Anmelder: **Ralf F. Piepho Abwassertechnik GmbH**
**Rittergut 2**
**D-3015 Wennigsen 5(DE)**

(72) Erfinder: **Piepho, Ralf F.**
**Rittergut 2**
**D-3015 Wennigsen 5(DE)**

(74) Vertreter: **Rücker, Wolfgang, Dipl.-Chem.**
**Hubertusstrasse 2**
**D-3000 Hannover 1(DE)**

(54) **Naturdünger auf der Basis von Hühnermist und Verfahren zu seiner Herstellung.**

(57) Beschrieben wird die Herstellung eines Naturdüngers auf der Basis von Hühnermist, durch Vermischen des Hühnermistes mit Bentonitmehl und gebranntem Kalk, wobei die beiden letztgenannten Stoffe etwa zu gleichen Teilen auf etwa 80 bis 88% Hühnermist entfallen. Diesem Gemisch kann unter entsprechender Abstimmung der Bestandteile, Bentonitmehl und gebrannter Kalk, auch Gülle zugesetzt werden.

EP 0 125 440 A2

Croydon Printing Company Ltd.

Beschreibung

Die Erfindung betrifft ein Verfahren zur Herstellung eines Naturdüngers auf der Basis von Hühnermist. Durch die Haltung von Hühnern in besonderen Anlagen zur massenhaften Erzeugung von Eiern fällt Hühnermist in außerordentlichem Umfange und konzentriert an den Orten der Hühnerfarmen an.

Dieser mengenmäßige Anfall von Hühnermist ist mit einer ganzen Reihe von Problemen behaftet. Es sei beispielsweise genannt, die sich ergebende Geruchsbelästigung und die Schwierigkeit der Verwertung von Hühnermist. Die Verwertung des Hühnermistes direkt als Düngemittel ist schwierig, wegen seiner Konzentration und unbefriedigenden Konsistenz, so daß nur geringe Mengen direkt angewandt werden können, beispielsweise in den Boden eingearbeitet werden können, obwohl Hühnerdung oder -mist ein nährstoffreicher und ein kohlenstoffarmer Dünger ist, mit etwa 72 % Stickstoff, 2,84 % Phosphorpentoxyd und 1,48 % Kaliumoxyd, bei 83 % Kot.

Meistens verwendet man heute den Hühnerdung in einem Gemenge mit Torf oder Sägemehl nach einer Lagerung von etwa 6 Monaten, vorzugsweise im Gartenbau, aber auch zur Kompostbereitung. Diese Art der Verwendung oder Verarbeitung des Hühnermistes zwingt dazu, eine große Lagerhaltung zu betreiben und ist auch relativ begrenzt in der Verwertung und in der Anwendung.

Es ist daher Aufgabe der vorliegenden Erfindung, eine fortschrittliche Verwertung von Hühnermist vorzuschlagen, die sowohl in der Herstellung als auch in der Handhabung und in der Anwendung vorteilhafter ist, wenig Aufwand erfordert und schneller zu einem brauchbaren Düngemittel führt.

Erreicht wird das dadurch, daß der Hühnermist zusammen mit Bentonitmehl und gebranntem Kalk vermischt wird. Dieses Gemisch führt zu einem Granulat, dessen Feuchtigkeitsgehalt durch die Zugabe von gebranntem Kalk steuerbar ist, beispielsweise durch das Bentonitmehl. Das Bentonitmehl hat die Eigenschaft, Feuchtigkeit zu binden, während sich der gebrannte Kalk dabei in Kalziumhydroxyd umwandelt, die Masse erwärmt und überschüssiges Wasser ausgetrieben wird.

Dieser Zubereitungsvorgang ist relativ einfach und kurzfristig. Der Hühnermist wird zusammen mit Bentonitmehl und gebranntem Kalk, die beide vorab gemischt sein können, in einen Mischer gegeben und so lange gemischt, bis ein homogenes Gemisch angefallen ist und das Gemisch ein rieselfähiges Granulat bildet. Die zugegebene Menge an Bentonitmehl und gebranntem Kalk kann 12 bis 20 % ausmachen, bezogen auf den Hühnermist.

In Verfolg des erfindungsgemäßen Gedankens ist zur Herstellung eines natürlichen Düngemittels auch die Verwertung anderer landwirtschaftlich anfallender Miste- oder Stoffe möglich. Beispielsweise kann dem Gemisch aus Bentonit, gebranntem Kalk und Hühnermist , auch Gülle zugesetzt werden, wenn dabei der Anteil an Bentonit und/oder gebranntem Kalk entsprechend berücksichtigt ist, und/oder die Konditionierung des bereits entstandenen Gesamtgemisches. Durch den Anteil an gebranntem Kalk, der bei der Zugabe der Gülle gelöscht wird, können beträchtliche Wassermengen verdampft werden, während die wertvollen Düngestoffe in dem Gemenge als Feststoffe oder als Feuchtstoffe zurückbleiben.

0125440

Die Menge an Bentonitmehl, Kalk, Gülle und Hühnermist ist den jeweiligen Erfordernissen und dem Zustand des Hühnermistes entsprechend abzustimmen. Durch eine einfache Untersuchung läßt sich der Wasseranteil des Mistes schnell bestimmen.

Der auf diese Weise gewonnene rieselfähige granulierte Naturdünger hat nicht nur eine außerordentliche Düngewirkung, aus den Verbindungen, die aus dem Mist, bzw. aus der Gülle stammen, sondern stellt auch aufgrund seines Gehaltes an Bentonitmehl und Kalziumverbindungen ein wertvolles Konditionierungsmittel für Böden dar. Der Naturdünger ist für den Gartenbau und zur Kompostbereitung, aber auch für den Ackerbau geeignet. Aufgrund der relativ einfachen Verarbeitung kann die Herstellung dieses natürlichen Düngers in Verbindung mit einer Hühnerfarm betrieben werden.

Der nach dem erfindungsgemäßen Verfahren aufbereitete Hühnermist ist geruchsfrei und kann unter einfachen Bedingungen gelagert werden. Er wird in Säcken verpackt, versandt .

Patentansprüche

0125440

Naturdünger auf der Basis von Hühnermist, dadurch gekennzeichnet, .ß er ein Gemisch aus Hühnermist, Bentonitmehl und gebranntem Kalk t.

Dünger nach Anspruch 1, dadurch gekennzeichnet, daß der Anteil an ntonitmehl und Kalk jeweils zu gleichen Teilen im Bereiche von ! - 20 Gew.-%, bezogen auf den Hühnermist, zugegen ist.

. Dünger nach Anspruch 1 und 2, dadurch gekennzeichnet, daß er ei- ɘn Anteil Gülle enthält.

. Verfahren zur Herstellung eines Naturdüngers auf der Basis von ühnermist, nach Anspruch 1 - 3, dadurch gekennzeichnet, daß Hühnerist, sowie Bentonit und Bentonitmehl und gebrannter Kalk gegebenenalls mit einem Volumen Gülle in einem Mischer derart vermischt werden, aß sich ein rieselfähiges, körniges Düngemittel ergibt.

. Verfahren nach Anspruch 1, dadurch gekennzeichnet, daß dem Hüh- .ermist entsprechend seiner Konsistenz, ein gleichteiliges Gemenge .us gebranntem Kalk und Bentonitmehl ·in einer Menge von 12 bis 20 ;ew.-%, bezogen auf den Hühnermist, zugemischt wird.

0125440

6. Verfahren nach Anspruch 4 und 5, <u>dadurch gekennzeichnet,</u> daß die Menge des Bentonitmehls, bzw. des Kalkes unter Berücksichtigung des Feuchtigkeitsgehaltes des Hühnermistes bestimmt wird.

7. Verfahren nach Anspruch 4 - 6, <u>dadurch gekennzeichnet,</u> daß bei der Mitverarbeitung von Gülle, die Menge an gebranntem Kalk und Bentonitmehl unter Berücksichtigung des sich ergebenden Gesamtwassergehaltes bemessen wird, derart, daß ein rieselfähiges Granulat entsteht.